# EUROPEAN PATENT APPLICATION

(11) **EP 4 471 488 A1**
(43) Date of publication of application: **04.12.2024**
(21) Application number: 23747119.8
(22) Date of filing: 27.01.2023
(51) Int. Cl.: G02B 27/01, B60R 11/02, G02B 30/30, G02F 1/13, G09G 5/00, G09G 5/10

(54) **VIRTUAL IMAGE DISPLAY DEVICE**

(30) Priority: 27.01.2022 JP 2022010847
(71) Applicant: Kyocera Corporation, Kyoto-shi, Kyoto 612-8501 (JP)
(72) Inventor: MORISHITA, Katsuhiko, Kyoto-shi, Kyoto 612-8501 (JP); OZAWA, Ryosuke, Kyoto-shi, Kyoto 612-8501 (JP); EBISU, Yoichi, Kyoto-shi, Kyoto 612-8501 (JP); TANAKA, Yoshiki, Kyoto-shi, Kyoto 612-8501 (JP)
(74) Representative: TBK
(86) International application number: PCT/JP2023/002750
(87) International publication number: WO 2023/145909

(57) **Abstract**

A virtual image display device includes a display including a display surface that displays an image, an optical system that projects image light emitted from the display surface to form a virtual image in a field of view of a user, a measurer that measures a background luminance level, and a controller. The controller changes a luminance level of an image to be displayed on the display surface between the background luminance level measured by the measurer and a predetermined luminance level higher than the background luminance level based on gray level-luminance level characteristics of the display.

## Description

### TECHNICAL FIELD

The present disclosure relates to a virtual image display device.

### BACKGROUND OF INVENTION

A known virtual image display device is described in, for example, Patent Literature 1.

### CITATION LIST

### PATENT LITERATURE

Patent Literature 1: Japanese Unexamined Patent Application Publication No. 2009-008722

### SUMMARY

In an aspect of the present disclosure, a virtual image display device includes a display including a display surface that displays an image, an optical system that projects image light emitted from the display surface to form a virtual image in a field of view of a user, a measurer that measures a background luminance level, and a controller that changes a luminance level of an image to be displayed on the display surface between the background luminance level measured by the measurer and a predetermined luminance level higher than the background luminance level based on gray level-luminance level characteristics of the display.

### BRIEF DESCRIPTION OF THE DRAWINGS

The objects, features, and advantages of the present disclosure will be more apparent from the following detailed description and the drawings.
FIG. 1 is a diagram of a virtual image display device according to one embodiment of the present disclosure.
FIG. 2 is a side view of a vehicle incorporating the virtual image display device in FIG. 1.
FIG. 3 is a graph showing a relationship between an input gray level and a display luminance level in a display device.
FIG. 4 is a graph showing the relationship between the input gray level and the display luminance level in the virtual image display device according to the embodiment of the present disclosure.
FIG. 5 is a graph describing correspondence between the input gray level and the display luminance level stored in a lookup table.
FIG. 6A is a diagram of display areas in a liquid crystal display panel.
FIG. 6B is a diagram of light-emitting areas in a backlight.
FIG. 7A is a graph of a luminance level histogram of an information display image.
FIG. 7B is a graph of a luminance level histogram of a background image.
FIG. 8 is a diagram of a virtual image display device according to a variation of the embodiment of the present disclosure.

### DESCRIPTION OF EMBODIMENTS

Various virtual image display devices that are incorporated in movable bodies such as vehicles to allow users to view virtual images have been suggested as described in, for example, Patent Literature 1.

Such a known virtual image display device may allow a user to view a virtual image less easily when the background luminance level of a field of view of the user is high.

A virtual image display device according to one or more embodiments of the present disclosure will now be described with reference to the accompanying drawings. The drawings used hereafter are schematic and are not necessarily drawn to scale relative to the actual size of each component in the drawings.

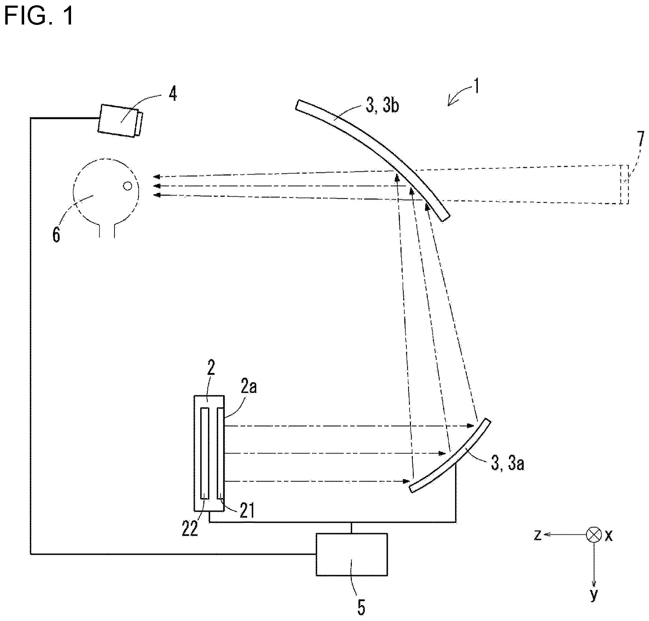

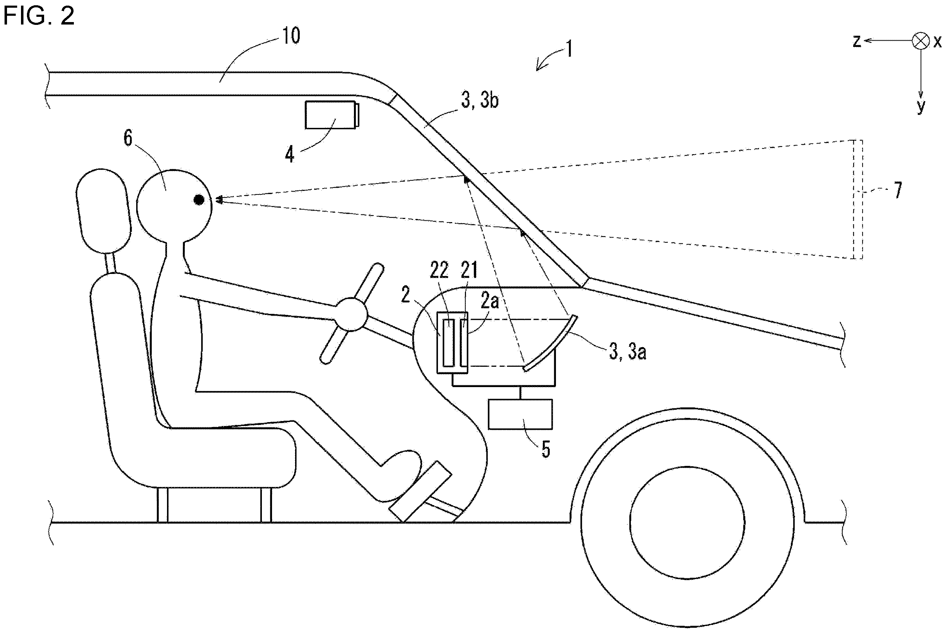

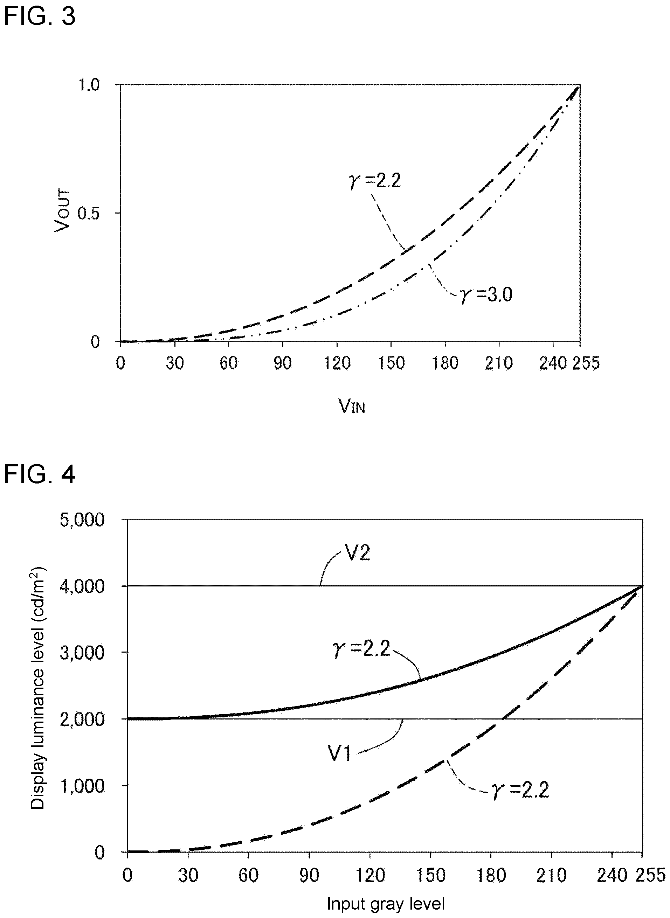

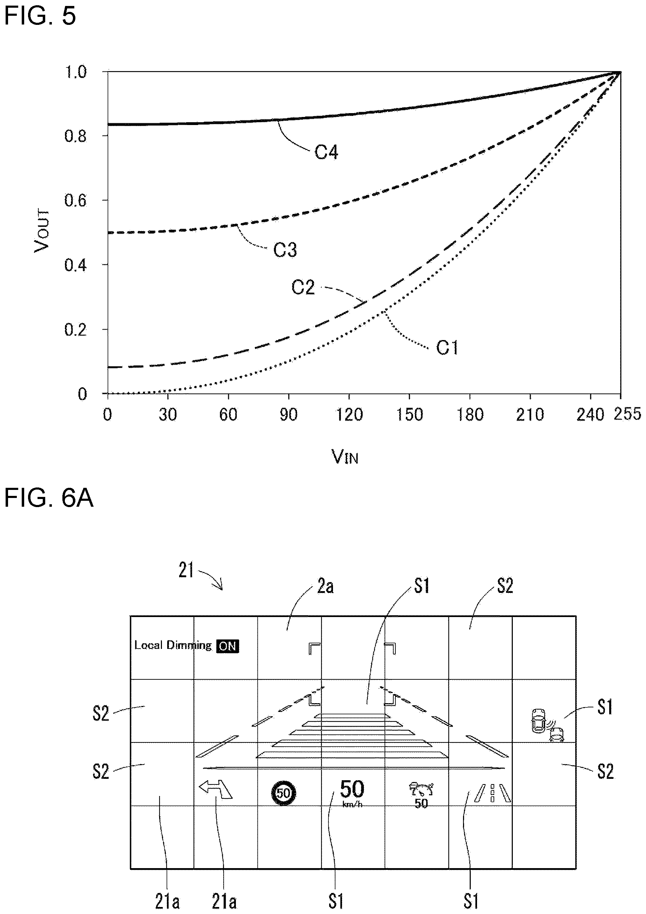

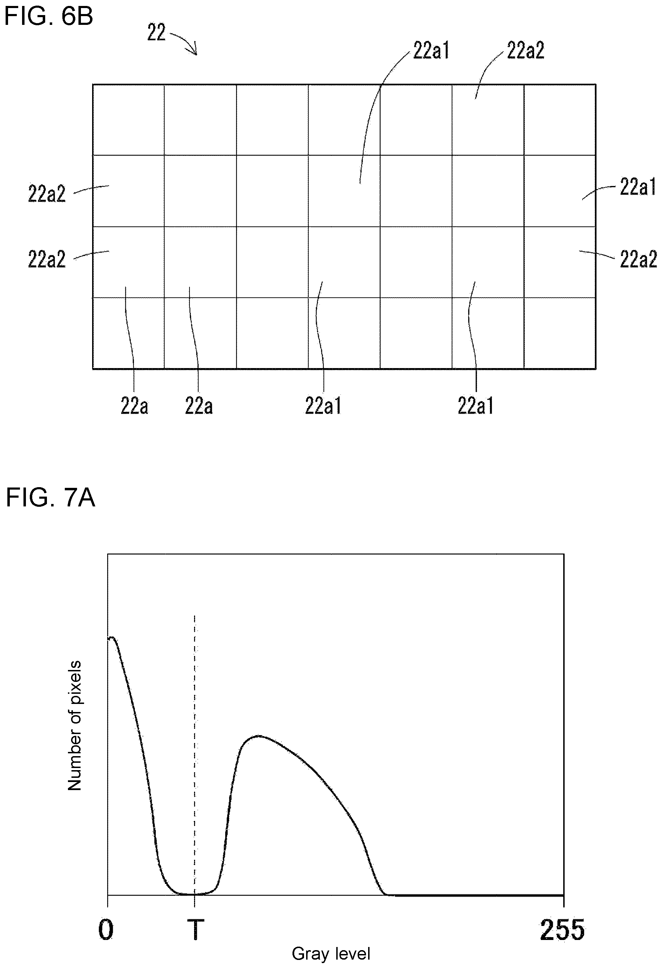

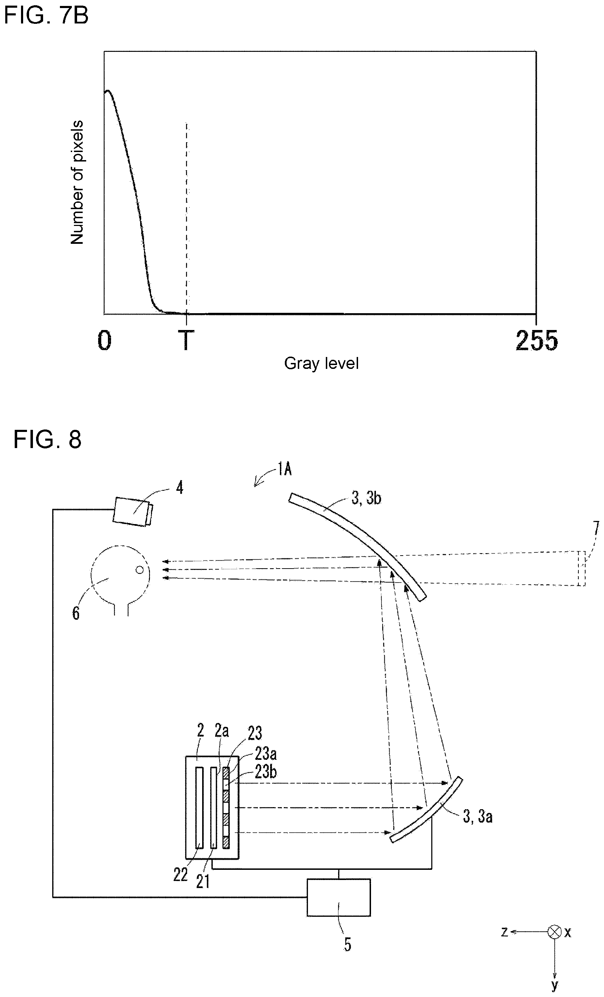

FIG. 1 is a diagram of a virtual image display device according to one embodiment of the present disclosure. FIG. 2 is a side view of a vehicle incorporating the virtual image display device in FIG. 1. FIG. 3 is a graph showing a relationship between an input gray level and a display luminance level in a display device. FIG. 4 is a graph showing the relationship between the input gray level and the display luminance level in the virtual image display device according to the embodiment of the present disclosure. FIG. 5 is a graph describing correspondence between the input gray level and the display luminance level stored in a lookup table (LUT). FIG. 6A is a diagram of display areas in a liquid crystal display panel. FIG. 6B is a diagram of light-emitting areas in a backlight. FIG. 7A is a graph of a luminance level histogram of an information display image. FIG. 7B is a graph of a luminance level histogram of a background image. FIG. 6A is a plan view of the liquid crystal display panel as viewed in a direction perpendicular to a display surface of a display. FIG. 6B is a plan view of the backlight as viewed in the direction perpendicular to the display surface of the display. FIG. 8 is a diagram of a virtual image display device according to a variation of the embodiment of the present disclosure.

In the present embodiment, a virtual image display device 1 includes a display 2, an optical system 3, a measurer 4, and a controller 5, as illustrated in FIG. 1. The virtual image display device 1 may be incorporated in a vehicle 10 as illustrated in FIG. 2. Although FIG. 2 illustrates the vehicle 10 that is a passenger vehicle, the vehicle 10 is not limited to a passenger vehicle and may be an automobile such as a truck, a bus, a motorcycle, or a trolley bus. The vehicle 10 is not limited to an automobile and may be a railroad vehicle, an industrial vehicle, a community vehicle, or a fixed-wing aircraft that travels on a runway.

The display 2 includes a display surface 2a to display an image (also referred to as an input image) input from an external device (e.g., the controller 5). The display 2 emits image light representing the input image from the display surface 2a.

The display 2 may include a transmissive display device or a self-luminous display device. The transmissive display device may be a liquid crystal display device including a liquid crystal display panel and a backlight. The liquid crystal display panel may be, for example, an in-plane switching (IPS) panel, a fringe field switching (FFS) panel, a vertical alignment (VA) panel, or an electrically controlled birefringence (ECB) panel. The backlight may be a direct backlight or an edge backlight. The self-luminous display device may include, for example, multiple self-luminous elements arranged two-dimensionally. The self-luminous elements may be, for example, light-emitting diode (LED) elements, organic LED (OLED) elements, or semiconductor laser diode (LD) elements. FIGs. 1 and 2 illustrate the display 2 that is a liquid crystal display device including a liquid crystal display panel 21 and a backlight 22.

The measurer 4 measures a background luminance level (cd/m²) of a field of view of a user 6. The measurer 4 may include a luminance meter with its light-receiving surface facing a front portion of the field of view of the user 6. The measurer 4 may include an image sensor with its imaging surface facing the front portion of the field of view of the user 6. The image sensor may be, for example, a charge-coupled device (CCD) image sensor or a complementary metal-oxide semiconductor (CMOS) image sensor. The background luminance level may be an average of the luminance levels of images captured with the image sensor. The luminance level may be a luminance level Y calculated by a formula Y = 0.299R + 0.587G + 0.114B, using color components R, G, and B of each pixel. Note that the weights (coefficients such as 0.299 and 0.587) of the color components R, G, and B in the luminance level Y are not limited to the above values and may be set as appropriate for human visual characteristics. The measurer 4 is located above the head of the user 6, but may be located on a dashboard of the vehicle 10. The measurer 4 may be located outside the vehicle 10 when the measurer 4 can measure the background luminance level.

The measurer 4 outputs the measured background luminance level to the controller 5. The measurer 4 and the controller 5 are connected to each other through wired or wireless communication. For the virtual image display device 1 incorporated in the vehicle 10, the measurer 4 and the controller 5 may be connected to each other with a vehicle network such as a controller area network (CAN).

The measurer 4 captures an image of a background of the field of view of the user 6 and calculates the background luminance level based on image data indicating the background obtained by capturing the image. The measurer 4 may determine the weather (e.g., sunny, cloudy, rainy, or snowy) in the surroundings of the vehicle 10 based on the image data obtained by capturing the image. The measurer 4 may determine road surface conditions (e.g., dry, wet, or covered with snow) based on the image data obtained by capturing the image. Note that the background luminance level of the field of view of the user 6 may be a luminance level of the surroundings of equipment, or for example, a vehicle, incorporating the virtual image display device 1.

The optical system 3 projects the image light emitted from the display surface 2a into the field of view of the user 6 as a virtual image 7. The optical system 3 is located on an optical path of the image light emitted from the display 2. The optical system 3 may include an optical member 3a and an optical member 3b as illustrated in FIG. 1. The optical system 3 may include one optical member or three or more optical members, instead of two optical members. The optical members may include a reflector including a freeform mirror, a convex mirror, or a concave mirror. The optical members may include a refractor including a convex lens or a concave lens. The convex lens includes a biconvex lens, a plano-convex lens, or a convex meniscus lens. The concave lens includes a biconcave lens, a plano-concave lens, or a concave meniscus lens. The optical members may include various optical members other than a reflector or a refractor. For the virtual image display device 1 incorporated in the vehicle 10, a windshield of the vehicle 10 may be a part of the optical system 3 as the optical member 3b as illustrated in FIG. 1.

The controller 5 is connected to each of the components of the virtual image display device 1 to control each of the components. The controller 5 is, for example, a processor. The controller 5 may include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The controller 5 may be a system on a chip (SoC) or a system in a package (SiP) in which one or more processors cooperate with one another.

The controller 5 may include a storage. The storage may store various items of information about the operation of the virtual image display device 1, or for example, programs to operate each of the components of the virtual image display device 1 and a LUT. The storage may be, for example, a semiconductor memory. The storage may serve as a work memory for the controller 5.

The measurer 4 may output, to the controller 5, the image data obtained by capturing the image of the background of the field of view of the user 6, without measuring the background luminance level within the device. In this case, the controller 5 may calculate the background luminance level of the field of view of the user 6 based on the image data obtained from the measurer 4. The controller 5 may determine at least one of the weather (e.g., sunny, cloudy, rainy, or snowy) in the surroundings of the vehicle 10 or the road surface conditions (e.g., dry, wet, or covered with snow) based on the image data obtained from the measurer 4. The controller 5 may include an external communication device and obtain, through the external communication device, information about, for example, the weather in the surroundings of the vehicle 10 and the road surface conditions from a network.

In video equipment such as a display device, an input value (also referred to as the input gray level) V_{IN} of, for example, an image signal and an output value (also referred to as the display luminance level) V_{OUT} typically do not have a linear relationship represented by a linear function, and have a nonlinear relationship represented by a formula V_{OUT} = V_{IN}^{γ} (γ is a real number different from 1) as illustrated in FIG. 3, where the minimum value of the display luminance level V_{OUT} is "0" and the maximum value is "1". The value of an exponent γ of exponentiation is also referred to as a γ value. The γ value may be, for example, 2.2, 3.0, or any other real number. Although the input gray level V_{IN} is represented by 8 bits (256 gray levels) in the example in FIG. 3, the input gray level V_{IN} may be represented by any number of bits set as appropriate.

For the display device with a display surface that is viewed by a user directly, image signals of the input image are corrected based on the formula V_{OUT} = V_{IN}^{γ} (this correction is also referred to as γ correction), thus allowing the user to view a high-quality image. For the display device that is a virtual image display device, pixels with a display luminance level lower than the background luminance level are less easily viewable by the user 6 as indicated by a broken line in FIG. 4. Thus, the user 6 may not view the virtual image 7 properly. In the example illustrated in FIG. 4, pixels with a display luminance level less than 2000 cd/m², or in other words, pixels with the input gray level less than about 185 are less easily viewable by the user 6. Thus, the user 6 may not view the virtual image 7 properly.

In the virtual image display device 1 according to the present embodiment, as indicated by a solid line in FIG. 4, the controller 5 is configured to change the luminance level of an image (also referred to as a display image) to be displayed on the display surface 2a between a background luminance level (also referred to as a first luminance level) V1 measured by the measurer 4 and a predetermined luminance level (also referred to as a second luminance level) V2 higher than the first luminance level V1 based on gray level-luminance level characteristics of the display 2. In other words, the virtual image display device 1 raises the display luminance level V_{OUT} to cause a minimum luminance level V_{MIN} of the display luminance level V_{OUT} to match the background luminance level V1, and then changes the display luminance level V_{OUT} between the minimum luminance level V_{MIN} and the predetermined luminance level V2 based on the gray level-luminance level characteristics of the display 2. The virtual image display device 1 allows the luminance level of the image to be displayed on the display surface 2a to be higher than or equal to the background luminance level V1, thus allowing the user 6 to view the virtual image 7 properly when the background luminance level V1 is high. The minimum luminance level V_{MIN} is any level that is higher than or equal to the background luminance level V1. The minimum luminance level V_{MIN} thus may not be equal to the background luminance level V1. In the example illustrated in FIG. 4, the first luminance level V1 is 2000 cd/m², and the second luminance level V2 is 4000 cd/m². The first luminance level V1 may change based on the background of the user 6, and the second luminance level V2 may be set to any value greater than the first luminance level V1.

The controller 5 may determine a difference between the second luminance level V2 and the first luminance level V1 based on the first luminance level V1. This allows the user 6 to view the virtual image 7 with a wider dynamic range when the first luminance level V1 changes. The controller 5 may increase the difference between the second luminance level V2 and the first luminance level V1 in response to an increase in the first luminance level V1. This allows the user 6 to view the virtual image 7 with a wider dynamic range when the first luminance level V1 changes.

The controller 5 may determine the difference between the second luminance level V2 and the first luminance level V1 based on the time. For example, the controller 5 may increase the difference between the second luminance level V2 and the first luminance level V1 when the time is daytime (e.g., 9:00 to 15:00) as compared with when the time is other than the daytime. This allows the user 6 to view the virtual image 7 with a wider dynamic range when the background luminance level V1 is high during the daytime.

The controller 5 may determine the difference between the second luminance level V2 and the first luminance level V1 based on the weather in the surroundings of the vehicle 10. For example, the controller 5 may increase the difference between the second luminance level V2 and the first luminance level V1 when the weather is sunny or snowy as compared with when the weather is cloudy or rainy. This allows the user 6 to view the virtual image 7 with a wider dynamic range when the background luminance level V1 is high in sunny or snowy weather.

The controller 5 may determine the difference between the second luminance level V2 and the first luminance level V1 based on the road surface conditions. For example, the controller 5 may increase the difference between the second luminance level V2 and the first luminance level V1 when the road surface is covered with snow as compared with when the road surface is dry or wet. This allows the user 6 to view the virtual image 7 with a wider dynamic range when the background luminance level V1 is high due to the road surface covered with snow.

The controller 5 may change the gray level-luminance level characteristics, or the γ value, based on the first luminance level V1. This allows the luminance level of the display image to be corrected as appropriate for the human visual characteristics when the first luminance level V1 changes, thus allowing the user 6 to view the virtual image 7 properly. The controller 5 may decrease the γ value when the first luminance level V1 is less than a first predetermined value. The controller 5 may increase the γ value when the first luminance level V1 is greater than a second predetermined value greater than or equal to the first predetermined value. A decrease in the γ value may be determined based on a difference between the first luminance level V1 and the first predetermined value. An increase in the γ value may be determined based on a difference between the first luminance level V1 and the second predetermined value.

The virtual image display device 1 may include, for each of multiple values of the first luminance level V1, a LUT in which gray level values of the input image and luminance level values of the display image correspond to each other. The LUT may store multiple correspondences between the input gray level V_{IN} and the display luminance level V_{OUT} as illustrated in FIG. 5. Although FIG. 5 illustrates four correspondences C1, C2, C3, and C4 between the input gray level V_{IN} and the display luminance level V_{OUT}, the LUT may store fewer than four correspondences or five or more correspondences. The LUT may be stored in the storage included in the controller 5. The luminance level values of the display image may be stored as voltage values applied to each of the pixels. The controller 5 may select one of the multiple correspondences based on the first luminance level V1 measured by the measurer 4, and control the luminance level of the display image based on the selected correspondence, the first luminance level V1, and the second luminance level V2.

The display 2 may be a liquid crystal display device including the liquid crystal display panel 21 and the backlight 22 as illustrated in FIGs. 1 and 2. The liquid crystal display panel 21 includes the display surface 2a of the display 2. The liquid crystal display panel 21 may include multiple display areas 21a obtained by dividing the display surface 2a into multiple areas as illustrated in FIG. 6A. The backlight 22 may include multiple light-emitting areas 22a corresponding to the display areas 21a as illustrated in FIG. 6B. The multiple light-emitting areas 22a may be individually switchable between an emissive state and a non-emissive state. Emission luminance levels of the multiple light-emitting areas 22a may be individually controllable as referred to as local dimming. Note that FIG. 6A illustrates an example image displayed on the display surface 2a as viewed in a direction perpendicular to the display surface 2a. The image displayed on the display surface 2a may be an image inverted at least laterally or vertically from the image illustrated in FIG. 6A.

The backlight 22 may be a direct backlight located adjacent to a back surface of the liquid crystal display panel 21 and including multiple light sources arranged two-dimensionally. The multiple light source face the liquid crystal display panel 21. The light sources in the direct backlight may be, for example, LED elements, OLED elements, or LD elements.

The backlight 22 is not limited to a direct backlight, and may include an edge backlight and a liquid crystal shutter located adjacent to a front surface of the edge backlight. The liquid crystal shutter can control the light transmittance based on an applied voltage. The liquid crystal shutter may include multiple pixels and be configured to control the light transmittance for each of the pixels. The liquid crystal shutter can form a portion with a high light transmittance or a portion with a low light transmittance in an intended shape. The edge backlight includes multiple light sources arranged on an outer periphery of the edge backlight. The edge backlight may include, for example, LED elements, OLED elements, LD elements, cold cathode fluorescent lamps, halogen lamps, or xenon lamps as the light sources.

The number of display areas 21a included in the display surface 2a may be set as appropriate. The number of display areas 21a may be, for example, the same as the number of light-emitting areas in the backlight 22. For the backlight 22 that is a direct backlight, the number of light-emitting areas in the backlight 22 may be, for example, the number of light sources in the backlight 22. For the backlight 22 that is an edge backlight, the number of light-emitting areas in the backlight 22 may be the number of pixels in the liquid crystal shutter.

The controller 5 may set each of the multiple light-emitting areas 22a to the emissive state or to the non-emissive state based on image data indicating multiple partial images to be displayed on the respective multiple display areas 21a. The controller 5 may set light-emitting areas 22a1 to the emissive state. The light-emitting areas 22a1 correspond to the display areas 21a to display partial images (also referred to as information display images) S1 including navigation information (e.g., lane guidance, navigation guidance, a warning about an inter-vehicle distance, and pedestrian detection) for the user 6. The controller 5 may set light-emitting areas 22a2 to the non-emissive state. The light-emitting areas 22a2 correspond to the display areas 21a to display partial images (also referred to as background images) S2 other than the information display images S1. This reduces deterioration in the viewability of the information display images S1 resulting from light leakage and allows the information display images S1 to be emphasized.

The controller 5 may determine whether a partial image to be displayed on each of the display areas 21a is the information display image S1 or the background image S2 based on a gray level-pixel count histogram of the partial image. In the gray level-pixel count histogram, a vertical axis indicates the number of pixels, and a horizontal axis indicates the gray level, as illustrated in FIGs. 7A and 7B. The gray level can be calculated from the color components R, G, and B of each of the pixels in each of the partial images. The gray level may be an amount of the color components R, G, and B of each of the pixels in the partial image overlaid with one another, or for example, 0.299R + 0.587G + 0.114B. The controller 5 may determine that a partial image is the information display image S1 when the proportion of the pixels with a gray level less than or equal to a predetermined threshold T to all the pixels in the partial image is less than N% (refer to FIG. 7A). The controller 5 may determine that a partial image is the background image S2 when the proportion of the pixels with a gray level less than or equal to the predetermined threshold T to all the pixels in the partial image is greater than or equal to N% (refer to FIG. 7B). In this case, the backlight may be controlled to be turned off to enter the non-emission state. The threshold T may be set as appropriate. For the gray level with 256 gray levels, the threshold T may be, for example, 5, 10, or 15. The value N may be, for example, 90, 95, or 99.

The controller 5 may control the emission luminance levels of the light-emitting areas 22a1 based on the first luminance level V1. The controller 5 may increase the emission luminance levels of the light-emitting areas 22a1 in response to an increase in the first luminance level V1. This allows the user 6 to view the virtual image 7 with a wider dynamic range when the first luminance level V1 changes.

The controller 5 may control the emission luminance levels of the light-emitting areas 22a1 based on, for example, the time, the weather in the surroundings of the vehicle 10, or the road surface conditions.

The controller 5 may control the emission luminance levels of the light-emitting areas 22a1 based on the time. For example, the controller 5 may increase the emission luminance levels of the light-emitting areas 22a1 when the time is daytime (e.g., 9:00 to 15:00) as compared with when the time is other than the daytime. This allows the user 6 to view the virtual image 7 with a wider dynamic range when the background luminance level V1 is high during the daytime.

The controller 5 may control the emission luminance levels of the light-emitting areas 22a1 based on the weather in the surroundings of the vehicle 10. For example, the controller 5 may increase the emission luminance levels of the light-emitting areas 22a1 when the weather is sunny or snowy as compared with when the weather is cloudy or rainy. This allows the user 6 to view the virtual image 7 with a wider dynamic range when the background luminance level V1 is high in sunny or snowy weather.

The controller 5 may control the emission luminance levels of the light-emitting areas 22a1 based on the road surface conditions. For example, the controller 5 may increase the emission luminance levels of the light-emitting areas 22a1 when the road surface is covered with snow as compared with when the road surface is dry or wet. This allows the user 6 to view the virtual image 7 with a wider dynamic range when the background luminance level V1 is high due to the road surface covered with snow.

A virtual image display device according to a variation of the embodiment of the present disclosure will now be described. In the present variation, a virtual image display device 1A has the same structure as or a similar structure to the virtual image display device 1 except for the display 2. The same or similar components will not be described in detail.

In the present variation, as illustrated in FIG. 8, the display 2 includes the liquid crystal display panel 21, the backlight 22, and a parallax barrier 23. The liquid crystal display panel 21 displays a composite image on the display surface 2a. The composite image includes a left-eye image viewable with the left eye of a user and a right-eye image viewable with the right eye of the user. The left-eye image and the right-eye image have parallax between them. The parallax barrier 23 is configured to divide image light representing the composite image emitted from the display surface 2a into left-eye image light representing the left-eye image and right-eye image light representing the right-eye image. Although the parallax barrier 23 is located frontward (rightward in FIG. 8) from the display surface 2a in the example in FIG. 8, the parallax barrier 23 may be located between the liquid crystal display panel 21 and the backlight 22.

The parallax barrier 23 includes multiple light-blocking portions 23a. The multiple light-blocking portions 23a block the image light emitted from the display surface 2a. As illustrated in FIG. 8, the multiple light-blocking portions 23a define open portions 23b between adjacent light-blocking portions 23a. The open portions 23b have a higher light transmittance than the light-blocking portions 23a. In other words, the light-blocking portions 23a have a lower light transmittance than the open portions 23b.

The open portions 23b are parts of the parallax barrier 23 to transmit light incident on the parallax barrier 23. The open portions 23b transmit light with a transmittance of a first predetermined value or greater. The first predetermined value may be, for example, 100% or a value close to 100%. The light-blocking portions 23a are parts of the parallax barrier 23 to block light incident on the parallax barrier 23. In other words, the light-blocking portions 23a are parts of the parallax barrier 23 to block an image to be displayed on the display surface 2a. The light-blocking portions 23a block light with a transmittance of a second predetermined value or less. The second predetermined value may be, for example, 0% or a value close to 0%. The ratio of the second predetermined value to the first predetermined value may be, for example, 1/100 or 1/1000.

The parallax barrier 23 may be a film or a plate with a transmittance less than the second predetermined value. In this case, the light-blocking portions 23a are parts of the film or the plate. The open portions 23b are slits in the film or the plate. The film may be made of a resin or another material. The plate may be made of a resin, metal, or another material. The parallax barrier 23 may be a member other than a film or a plate. The parallax barrier 23 may include a base made of a light-blocking material or a material containing an additive with light-blocking properties.

The parallax barrier 23 may be a liquid crystal shutter. For the parallax barrier 23 that is a liquid crystal shutter, the open portions 23b may have a transmittance of the first predetermined value or greater, and the light-blocking portions 23a may have a transmittance of the second predetermined value or less.

The optical system 3 may be configured to cause the image light representing the left-eye image to enter the left eye of the user 6 and the image light representing the right-eye image to enter the right eye of the user 6. Although the optical system 3 includes the optical member 3a and the optical member 3b in the example illustrated in FIG. 8, the optical system 3 may include one optical member or three or more optical members, instead of two optical members.

The controller 5 changes the luminance level of the composite image to be displayed on the display surface 2a between the first luminance level V1 measured by the measurer 4 and the second luminance level V2 higher than the first luminance level V1 based on the gray level-luminance level characteristics of the display 2. The virtual image display device 1A thus allows the user 6 to properly view the virtual image 7 stereoscopically when the first luminance level V1 of the field of view of the user 6 is high.

The virtual image display device according to one or more embodiments of the present disclosure allows the user to view a virtual image properly when the background luminance level of the field of view of the user is high.

The virtual image display device according to one or more embodiments of the present disclosure may have aspects (1) to (8) described below.
(1) A virtual image display device, comprising:
   a display including a display surface configured to display an image;
   an optical system configured to project image light emitted from the display surface to form a virtual image in a field of view of a user;
   a measurer configured to measure a background luminance level; and
   a controller configured to change a luminance level of an image to be displayed on the display surface between the background luminance level measured by the measurer and a predetermined luminance level higher than the background luminance level based on gray level-luminance level characteristics of the display.
(2) The virtual image display device according to (1), wherein
   the controller determines a difference between the background luminance level and the predetermined luminance level based on the background luminance level.
(3) The virtual image display device according to (2), wherein
   the controller increases the difference between the background luminance level and the predetermined luminance level in response to an increase in the background luminance level.
(4) The virtual image display device according to any one of (1) to (3), wherein
   the controller changes the gray level-luminance level characteristics based on the background luminance level.
(5) The virtual image display device according to any one of (1) to (4), wherein
   the display includes a liquid crystal display panel including the display surface and a backlight,
   the liquid crystal display panel includes a plurality of display areas being the display surface divided into a plurality of areas,
   the backlight includes a plurality of light-emitting areas corresponding to the respective plurality of display areas, and
   the controller sets each of the plurality of light-emitting areas to an emissive state or to a non-emissive state based on image data indicating a plurality of partial images to be displayed on the respective plurality of display areas.
(6) The virtual image display device according to (5), wherein
   the controller determines, based on the image data indicating the plurality of partial images, whether each of the plurality of partial images is an information providing image including navigation information for the user or a background image other than the information providing image, and sets a light-emitting area of the plurality of light-emitting areas corresponding to a display area of the plurality of display areas to display the background image to the non-emissive state.
(7) The virtual image display device according to (6), wherein
   the controller controls an emission luminance level of a light-emitting area of the plurality of light-emitting areas corresponding to a display area of the plurality of display areas to display the information providing image based on the background luminance level.
(8) The virtual image display device according to any one of (1) to (7), wherein
   the controller controls, based on the background luminance level, the luminance level of the image to correspond to the gray level-luminance level characteristics prestored.

Although the embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises. Although the virtual image display device is a head-up display incorporated in a vehicle in the above embodiments, the virtual image display device is not limited to this and may be a head-mounted display mounted on the head of a user. The virtual image display device according to one or more embodiments of the present disclosure is applicable to a display device that achieves, by adding information to a real-world environment, augmented reality in which the real world is augmented.

### REFERENCE SIGNS

1, 1A virtual image display device
2 display
2a display surface
21 liquid crystal display panel
21a display area
22 backlight
22a, 22a1, 22a2 light-emitting area
23 parallax barrier
23a light-blocking portion
23b open portion
3 optical system
3a optical member
3b optical member
4 measurer
5 controller
6 user
7 virtual image
10 vehicle
V1 background luminance level (first luminance level)
V2 predetermined luminance level (second luminance level)

## Claims

1. A virtual image display device, comprising:
a display including a display surface configured to display an image;
an optical system configured to project image light emitted from the display surface to form a virtual image in a field of view of a user;
a measurer configured to measure a background luminance level; and
a controller configured to change a luminance level of an image to be displayed on the display surface between the background luminance level measured by the measurer and a predetermined luminance level higher than the background luminance level based on gray level-luminance level characteristics of the display.

2. The virtual image display device according to claim 1, wherein
the controller determines a difference between the background luminance level and the predetermined luminance level based on the background luminance level.

3. The virtual image display device according to claim 2, wherein
the controller increases the difference between the background luminance level and the predetermined luminance level in response to an increase in the background luminance level.

4. The virtual image display device according to any one of claims 1 to 3, wherein
the controller changes the gray level-luminance level characteristics based on the background luminance level.

5. The virtual image display device according to any one of claims 1 to 4, wherein
the display includes a liquid crystal display panel including the display surface and a backlight,
the liquid crystal display panel includes a plurality of display areas being the display surface divided into a plurality of areas,
the backlight includes a plurality of light-emitting areas corresponding to the respective plurality of display areas, and
the controller sets each of the plurality of light-emitting areas to an emissive state or to a non-emissive state based on image data indicating a plurality of partial images to be displayed on the respective plurality of display areas.

6. The virtual image display device according to claim 5, wherein
the controller determines, based on the image data indicating the plurality of partial images, whether each of the plurality of partial images is an information providing image including navigation information for the user or a background image other than the information providing image, and sets a light-emitting area of the plurality of light-emitting areas corresponding to a display area of the plurality of display areas to display the background image to the non-emissive state.

7. The virtual image display device according to claim 6, wherein
the controller controls an emission luminance level of a light-emitting area of the plurality of light-emitting areas corresponding to a display area of the plurality of display areas to display the information providing image based on the background luminance level.

8. The virtual image display device according to any one of claims 1 to 7, wherein
the controller controls, based on the background luminance level, the luminance level of the image to correspond to the gray level-luminance level characteristics prestored.
